# EUROPEAN PATENT SPECIFICATION

(11) **EP 3 176 402 B1**
(45) Date of publication and mention of the grant of the patent: **22.05.2019**
(21) Application number: 15197638.8
(22) Date of filing: 02.12.2015
(51) Int. Cl.: F02B 23/06

(54) **PISTON FOR A GASEOUS FUEL INTERNAL COMBUSTION ENGINE**
KOLBEN FÜR VERBRENNUNGSMOTOR MIT GASFÖRMIGEM BRENNSTOFF
PISTON POUR UN MOTEUR À COMBUSTION INTERNE À COMBUSTIBLE GAZEUX

(43) Date of publication of application: 07.06.2017
(73) Proprietor: Caterpillar Energy Solutions GmbH, 68167 Mannheim (DE)
(72) Inventor: OHLER, Sebastian, Dr., 67069 Ludwigshafen (DE); SCHELLE, Jörg, 74395 Mundelsheim (DE)
(74) Representative: BRP Renaud & Partner mbB Rechtsanwälte Patentanwälte Steuerberater

(56) References cited:
- DE-A1- 2 407 783
- GB-A- 2 169 656
- JP-A- S6 032 928
- JP-A- S60 224 920
- US-A- 4 176 628
- US-A1- 2014 238 341

## Description

### Technical Field

The present disclosure relates to a piston for a gaseous fuel internal combustion engine, and a method for operating an internal combustion engine, particularly a gaseous fuel internal combustion engine.

### Background

In gaseous fuel internal combustion engines with positive or induced ignition, pistons with piston bowls may be used. Those piston bowls may have different piston bowl shapes. In general, the following common variants are used.
A) Pistons with a roof-shaped piston crown or head. The piston crown is configured for combustion processes with a gas-scavenged pre-chamber so that the flare jets strike the combustion chamber walls as late as possible.
B) Pistons with a tub-shaped piston crown. The piston crown is configured to retain a tumble flow generated by inflow from the inlet channels.
C) Pistons with an omega-shaped piston bowl. The piston crown is configured for optimal direct injection for diesel operation. It is also employed with gaseous fuel internal combustion engines with positive ignition (gaseous fuel Otto engines) for cost reasons and for the sake of simplicity, however, despite a possibly poor combustion profile.
D) Pistons with a pot-shaped piston bowl having a substantially straight circumferential bowl side face. The piston crown is configured to generate a squish flow in a radial direction between a piston top head face or rim and a bottom face of a cylinder head. Furthermore, a swirl flow in the pot-shaped piston bowl is intensified.

For gaseous fuel Otto engines with chamber plugs and cylinder head inlet channels creating a swirl flow, pistons with pot-shaped piston bowls are highly suitable. During the compression stroke, the mixture above the piston top head face (squish face) of the piston is displaced into the pot-shaped piston bowl. During the expansion stroke, the mixture is sucked out of the pot-shaped piston bowl. This process, in particular in the vicinity of the top dead center, may lead to intense squish flows. The squish flows increase the turbulences in the combustion chamber and accelerate the combustion. The high turbulence in the middle of the combustion chamber results in a short combustion duration.

Complementarily to the squish flow, the pot-shaped piston bowl may also lead to an acceleration of the swirl flow generated by the geometry of cylinder head inlet channels. Due to the rotary impulse retention, the rotational velocity of the swirl flow increases when the mixture is displaced into the pot-shaped piston bowls. The swirl flow may be used to keep up the turbulences during the combustion.

High turbulences in the pot-shaped piston bowl may allow to compensate a decrease in the laminar speed of combustion if operating gaseous fuel engines with lean fuel air mixtures, as common in large-bore engines. Particularly, the decrease in combustion may be compensated by a high turbulent speed of combustion by the creation of turbulences in the combustion chamber. The created turbulences result in an increased reaction area and, therefore, to an increase of the speed of transformation during combustion.

For a diesel engine of a direct injection type, US 4,635,597 A discloses a structure of a main combustion chamber. The main combustion chamber is configured as an omega-shaped piston bowl.

The present disclosure is directed, at least in part, to improving or overcoming one or more aspects of prior systems. A further piston for an internal combustion chamber is known from US 2014/0238341 A1, US 4,176,628 A, DE 2 407 783 A1 and JP S60-224920 A.

### Summary of the Disclosure

In one aspect, the present disclosure relates to a piston for a gaseous fuel internal combustion engine. The piston may comprise a piston skirt extending circumferentially about a central axis. The piston may comprise a piston top face extending in a plane perpendicular to the central axis and including an inner edge circumferentially extending about the central axis. The piston may comprise a pot-shaped piston bowl including a bowl side face extending circumferentially about the central axis. The piston bowl and the piston top face may be connected via the inner edge of the piston top face. The bowl side face may include a plurality of recesses and protrusions arranged alternately to each other in a circumferential direction about the central axis. The protrusions may extend in a direction to the central axis. The recesses and the protrusions may be configured so that the inner edge has a pinwheel shape. The recesses consist of a helical recess that helically extends about the central axis; and/or the protrusions consist of a helical protrusion that helically extends about the central axis.

In another aspect, the present disclosure relates to a method for operating an internal combustion engine, particularly a gaseous fuel internal combustion engine, with a piston. The method may comprise supplying a mixture of fuel and air via at least one inlet channel into a combustion chamber in a swirling motion about a central axis of the combustion chamber. The method may comprise guiding the swirling mixture of fuel and air into a pot-shaped piston bowl of the piston via an inner circumferential edge connecting the piston bowl and a piston top face of the piston. The inner circumferential edge may have a pinwheel shape.

As used herein, "pin wheel shape" used in conjunction with the inner circumferential edge of the piston top face means that, in a plane perpendicular to the central axis, the recesses include a first recess section being concave (curved outward with respect to the central axis) and having a first recess section radius of curvature, a second recess section, and a third recess section being concave (curved outward with respect to the central axis) and having a third recess section radius of curvature. The second recess section is interconnected between the first recess section and the third recess section. The protrusions include a first protrusion section being convex (curved inward with respect to the central axis). The first recess section radius of curvature is smaller than the third recess section radius of curvature.

In some embodiments, the first recess section may be shorter than the third recess section.

In some embodiments, the third recess section radius of curvature may be greater than a first protrusion section radius of curvature of the first protrusion section.

In some embodiments, a straight section may be interconnected between the third recess section and the first protrusion section and/or between the first protrusion section and the first recess section.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a plan view of an exemplary piston according to the present disclosure;
Fig. 2 shows a cut view of the exemplary piston according to the present disclosure for showing the configuration of the piston bowl;
Fig. 3 shows a plan view of the exemplary piston according to the present disclosure for indicating some of the relevant dimensions of the exemplary piston; and
Fig. 4 shows a cut view of another exemplary piston (not forming part of the claimed invention) for showing the configuration of the piston bowl;
Fig. 5 shows a plan view of yet another exemplary piston according to the present disclosure;
Fig. 6 shows a cut view of the exemplary piston of Fig. 5 for showing the configuration of the piston bowl;
Fig. 7 shows a greatly simplified view of a piston bowl side face of the exemplary piston of Figs. 5 and 6, wherein the piston bowl side face is unwound in a plane for indicating some further relevant dimensions of the exemplary piston.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that based on a pot-shaped piston bowl, an increase in turbulences particularly in a center region of the piston bowl may be achieved if adapting the inflow portions of the piston top face into the piston bowl. Specifically, the desirable increase in turbulences can be achieved if forming an inflow edge into the piston bowl in a pin wheel shape as defined herein.

More specifically, a mixture of fuel and air is supplied in a swirling motion into the combustion chamber via inlet channels. Furthermore, squish flows directed in direction to the central axis are generated if moving the piston towards TDC. The squish flows are transformed into turbulences at a transition between the piston bowl and the surrounding piston top face due to the influence of the transition edge functioning as a stall edge. Those turbulences within the piston bowl can be effectively maintained and even increased if directing the above-noted swirling mixture of fuel and air from the inlet channels into the piston bowl in a highly turbulent flow into the piston bowl. It was found that a pin wheel shape as disclosed herein is particularly suitable for generating the desired turbulences during inflow of the swirling mixture of fuel and air into the piston bowl as is described in greater detail later on. Furthermore, the effect of the turbulent inflow may be even increased if providing helical recess sections and/or helical protrusion sections in a piston bowl side face of the piston bowl.

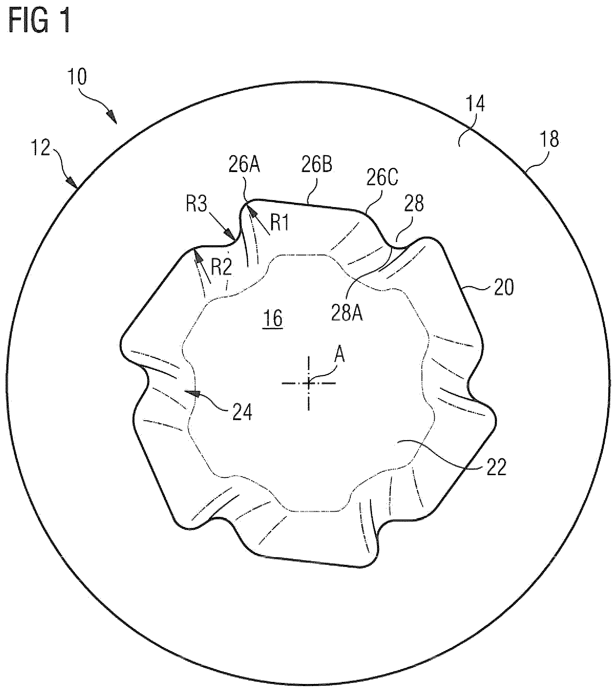

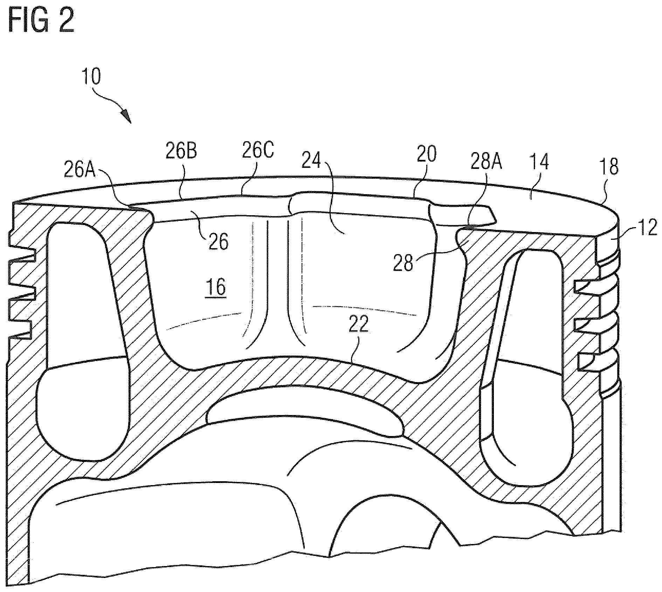

In Figs. 1 and 2, an exemplary piston 10 according to the present disclosure is shown in a plan view.

The piston 10 may be one of a plurality of pistons used in a gaseous fuel internal combustion engine, and may be reciprocatingly arranged in a respective cylinder to travel between a top dead center (TDC) and a bottom dead center (BDC) during operation of the engine.

For the purposes of the present disclosure, the internal combustion engine is considered as a four-stroke large-bore stationary or marine gaseous fuel internal combustion engine, in which the piston 10 as disclosed herein is particularly applicable as will be apparent from the following description. A large-bore engine is an engine having a cylinder bore diameter greater than 130 mm. However, one skilled in the art will recognize that the piston 10 as disclosed herein may be also usable in other internal combustion engines. Hence, the internal combustion engine may be of any type (gas, diesel, natural gas, propane, two-stroke, etc.), any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

The piston 10 includes a piston skirt 12, a piston top face or rim 14, and a piston bowl 16.

The piston skirt 12 extends circumferentially about a piston central axis A (see Fig. 1). In an assembled state, the piston skirt 12 of the piston 10 faces an inner cylindrical face of a cylinder liner or cylinder (not shown).

The piston top face 14 extends in a plane perpendicular to the central axis A and delimits the piston 10 at its top end. If assembled, the piston top face 14 faces a bottom face of a cylinder head (not shown) covering the respective cylinder associated with the piston 10.

In the shown embodiment, the piston top face 14 is configured as a flat and substantially annular ring face. The substantially annular ring face is delimited by a circular outer boundary or edge 18 that connects to the piston skirt 12, and a wavy circumferential inner boundary or edge 20 that connects to the piston bowl 16. As is described in greater detail later on, the edge 20 serves as a stall edge for the squish flows to generate turbulences within the piston bowl 16. Additionally, in some embodiments, the piston top face 14 may include one or more valve pockets to provide space for bottom portions of opened valves, for example poppet valves, if the piston 10 is at TDC.

The piston bowl 16 is provided in a top center region of the piston 10 and comprises a bowl bottom face 22 and a bowl side face 24. The bowl bottom face 22 is substantially disc-shaped, and positioned perpendicular and centered with respect to the central axis A.

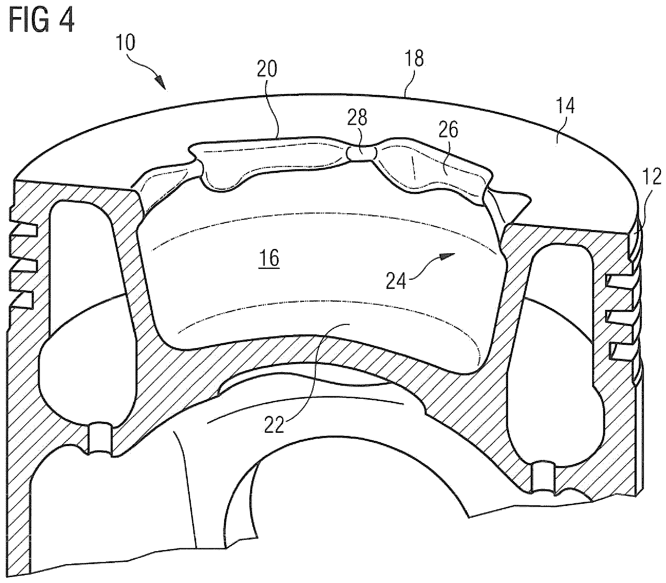

The piston bowl 16 is substantially configured as a pot-shaped piston bowl with a substantially flat bottom face 22 as compared to an omega-shaped piston bowl having a bowl bottom face with a center apex. In this context, "substantially flat" or "substantially disc-shaped" means that the bottom face 22 may still include a small increase in height, for example towards the center, however, having a maximum height of less than about 25 % of an entire height H2 (see Fig. 4) of the piston bowl side face 24. In contrast, the center apex of the omega-shaped piston bowl typically has a height of at least 50 % of a height of the respective piston bowl side face.

At a circumferential outer edge of the bowl bottom face 22, the same transitions smoothly into the bowl side face 24. Said bowl side face 24 extends circumferentially about the central axis A and interconnects the piston top face 14 and the bowl bottom face 22.

In some embodiments, the bowl side face 24 may taper in an axial direction of the central axis A from the piston top face 14 to the bowl bottom face 22 to improve the swirl guiding functionality into the piston bowl 16. For example, a taper angle confined between the bowl side face 24 and the central axis A may be within a range between 1° and 15°.

In the shown embodiment, the bowl side face 24 includes a plurality of recesses 26 and protrusions 28 arranged alternately to each other in a circumferential direction about the central axis A. The piston 10 as shown includes in total six recesses 26 and six protrusions 28. Other embodiments may include any number of recesses and protrusions, particularly within a range between 5 and 10 recesses and protrusions, respectively.

The recesses 26 and the protrusions 28 are symmetrically arranged in a circumferential direction about the central axis A. The recesses 26 extend in a direction away from the central axis A. The protrusions 28 extend in a direction to the central axis A, particularly in a radial direction to the central axis A.

As can be best seen in Fig. 1, the recesses 26 and the protrusions 28 are configured so that the inner edge 20 has a pinwheel shape. The inner edge 20 interconnects the piston bowl 16, specifically the bowl side face 24, and the surrounding piston top face 14.

Specifically, the recesses 26 include a first recess section 26A, a second recess section 26B and a third recess section 26C in a plane perpendicular to the central axis A. The first recess section 26A is formed concave (curved outward with respect to the central axis A) and includes a first recess section radius of curvature R1. The first recess section 26A interconnects the protrusion 28 and the second recess section 26B in a circumferential direction about the central axis A. The second recess section 26B is formed as a straight line and interconnects the first recess section 26A and the third recess section 26C in a circumferential direction about the central axis A. The third recess section 26C is formed concave (curved outward with respect to the central axis A) and includes a third recess section radius of curvature R2. The third recess section 26C interconnects the second recess section 26B and the protrusion 28 in a circumferential direction about the central axis A.

The protrusions 28 include a first protrusion section 28A in a plane perpendicular to the central axis A. The first protrusion section 28A is formed convex (curved inward with respect to the central axis A) and includes a first protrusion section radius of curvature R3. The first protrusion 28 interconnects the third recess section 26C and the first recess section 26A in a circumferential direction about the central axis A.

In the shown embodiment, the first recess section 26A is shorter than the third recess section 26C which in turn is shorter than the second recess section 26B. Furthermore, the third recess section radius of curvature R2 is greater than the first recess section radius of curvature R1 which in turn is greater than the first protrusion section radius of curvature R3.

In some embodiments, a ratio between the first recess section radius of curvature R1 and third recess section radius of curvature R2 may be within a range between 0,25 and 0,75, particularly about 0,5. A ratio between the third recess section radius of curvature R2 and the first protrusion section radius of curvature R3 may be within a range between 0,25 and 0,75, particularly about 0,5.

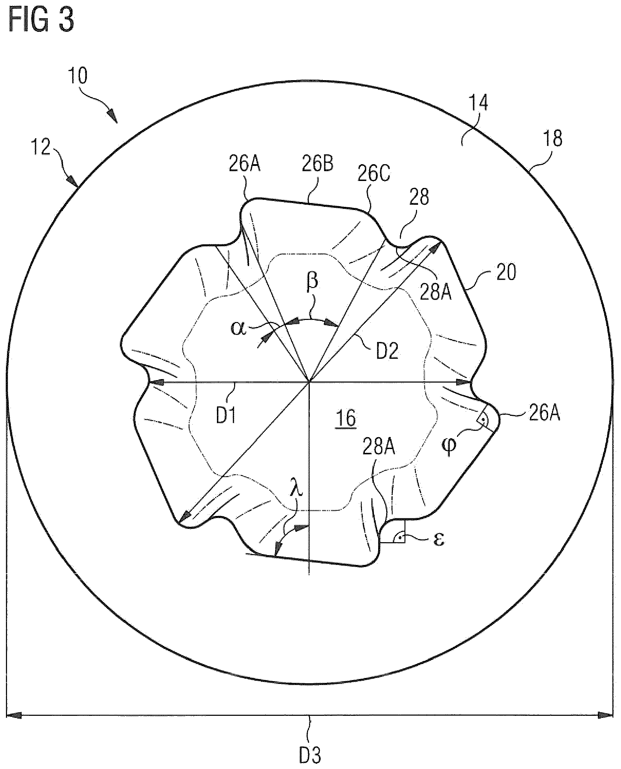

For example, in an embodiment having in total six recesses and protrusions 26, 28 and an inner bowl diameter D1 (see Fig. 3) of about 96 mm, the first recess section radius of curvature R1 may be 17 mm, the third recess section radius of curvature R2 may be 9 mm, and the first protrusion section radius of curvature R3 may be 5 mm.

Turning to Fig. 3 for describing some relevant dimensions of the recesses 26 and the protrusions 28 of the shown embodiment.

As indicated in Fig. 3, the piston bowl 16 has a first or inner bowl diameter D1 limited by a plurality of radial innermost points of the protrusions 28 with respect to the central axis A. Additionally, the piston bowl 16 has a second or outer bowl diameter D2 limited by a plurality of radial outermost points of the recesses 26 with respect to the central axis A. Further, the piston 10 (the outer edge 18 of the piston 10) has a piston outer diameter D3.

In some embodiments, the piston 10 may be configured such that a ratio between the first bowl diameter D1 and the second bowl diameter D2 may be within a range between 0,7 and 0,9, for example about 0,8. Additionally or alternatively, the piston 10 may be configured such that a ratio between the first bowl diameter D1 and the piston outer diameter D3 may be within a range between 0,45 and 0,65, for example about 0,55.

As an example, the first bowl diameter D1 may be 96 mm, the second bowl diameter D2 may be 120 mm, and the piston outer diameter D3 may be 190 mm.

Furthermore, a protrusion width angle α confined between two opposite outer ends of one protrusion 28 with respect to the central axis A and in a plane perpendicular to the central axis A may be within a range between 5° and 15°, particularly 10°.

Still further, a recess width angle β confined between two opposite outer ends of one recess 26 with respect to the central axis A and in a plane perpendicular to the central axis A may be within a range between 20° and 50° depending on the number of the recesses 26, for example 30° as depicted in Fig. 3.

A first protrusion section central angle ε of the first protrusion section 28A subtended between the two outer first protrusion section ends in a plane perpendicular to the central axis A is equal to or smaller than 90°.

A first recess section central angle ϕ of the first recess section 26A subtended between the two outer first recess section ends in a plane perpendicular to the central axis A is equal to or smaller than 90°.

As can be seen in Fig. 3, the central angles ε and ϕ are measured as central angels of a respective arc segment. In other words, the central angles ε and ϕ are measured on the concave side of the respective section.

As one skilled in the art will appreciate, the dimensions of the first recess section 26A, the second recess section 26B, the third recess section 26C and the first protrusion section 28A may be adapted in other embodiments, while maintaining the pinwheel shape of the inner edge 20 as defined herein.

Furthermore, a second recess section angle λ is confined between the second recess section 26B and a radial line drawn between the central axis A and a center of the second recess section 26B. The second recess section angle λ is within a range between 75° and 90°, particularly 86° as depicted in Fig. 3.

Referring back to Figs. 1 and 2, the exemplary piston 10 is provided with the recesses 26 and the protrusions 28 along an entire height of the bowl side face 24.

Alternatively, the recesses 26 and the protrusions 28 may be provided only in part along the height of the bowl side face 24. Such an example can be seen in Fig. 4 (not forming part of the claimed invention) in which the recesses 26 and the protrusions 28 are disposed in a top region of the piston bowl side face 24 only.

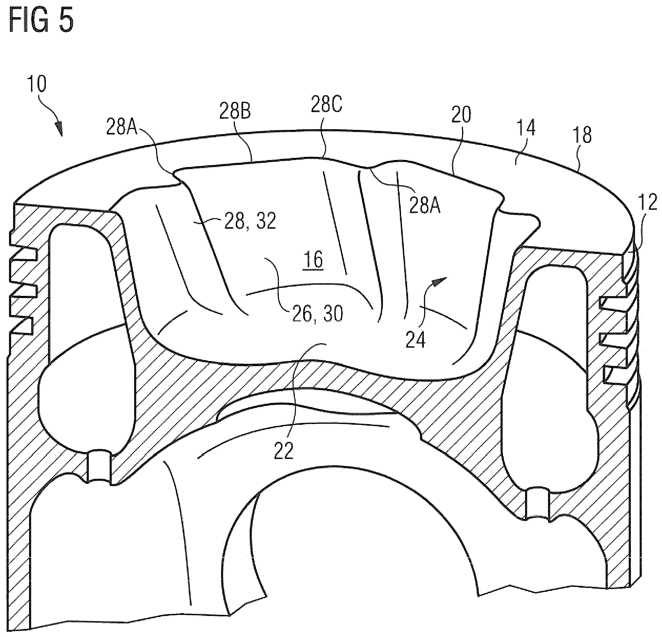

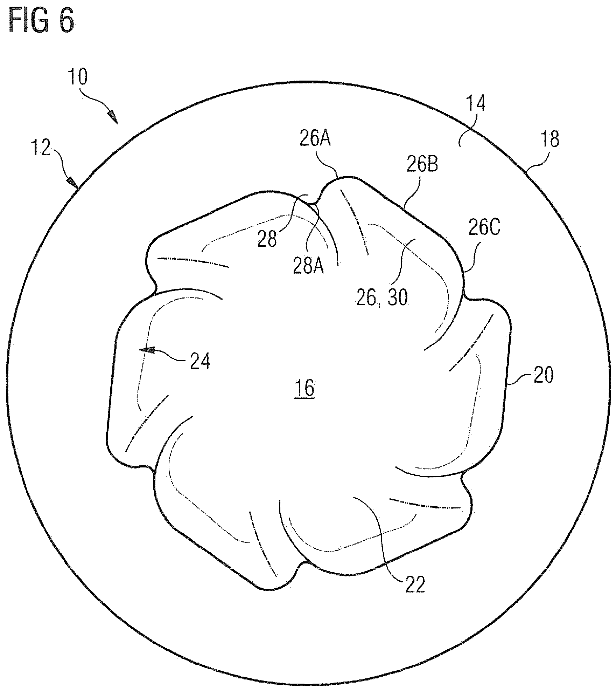

Referring now to Figs. 5 and 6 to describe another embodiment of the piston 10, wherein similar parts are indicated with same numerals as used for the embodiments shown in Figs. 1 to 4.

Here, the recesses 26 include a helical recess section 30 that helically extends about the central axis A. In other words, the helical recess sections 30 (and helical protrusion sections 32) extend in both the circumferential direction about the central axis A and a direction towards the bowl bottom face 22 (parallel to the central axis A).

In the shown embodiment, the recesses 26 are entirely constituted by the helical recess sections 30. In other embodiments, the helical recess sections 30 may only form a portion of the recesses 26, particularly a top portion of the recesses 26 arranged adjacent to the piston top face 14.

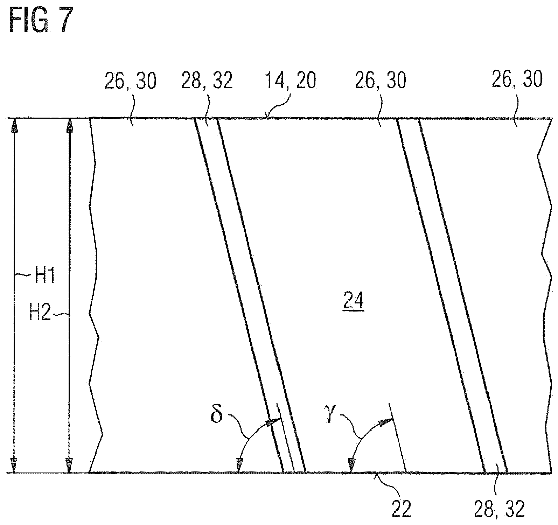

Similar to the recesses 26 and the helical recess sections 30, the protrusions 28 may include helical protrusion sections 32, particularly depending on a height of the protrusions 28 and the configuration of the helical recess sections 30 as can be best seen in the schematic drawing of Fig. 7.

Fig. 7 shows a greatly simplified drawing of the exemplary embodiment of a section of the piston bowl side face 24 of the piston 10 as depicted in Figs. 5 and 6, wherein the piston bowl side face 24 is unwound in a plane.

In the shown embodiment, the helical recess sections 30 and the helical protrusion sections 32 are formed as right-handed helical sections. Alternatively, the helical recess sections 30 and the helical protrusion sections 32 may be formed as a left-handed helical sections, or as combinations of left-handed and right-handed helical sections.

Furthermore, a height HI of the helical recess sections 30 corresponds to a height of the helical protrusion section 32. In some embodiments, the height HI of the helical recess sections 30 and the height of the helical protrusion sections 32 may be unequal, for example in embodiments in which the protrusions 28 are provided in a top region of the bowl side face 24 adjacent to the piston top face 14 only, and the recesses 26 including the helical recess sections 30 are provided in a greater region of the bowl side face 24.

In some embodiments, the height HI of the helical recess sections 30 corresponds to a height H2 of the piston bowl side face 24 as shown in Figs. 5 to 7. Alternatively, the height HI of the helical recess sections 30 may be smaller than the height H2 of the piston bowl side face 24. For example, the helical recess sections 30 may extend in a top region of the piston bowl side face 24 only, such as in the upper half, upper third or upper quarter of the piston bowl side face 24 with respect to the central axis A.

A pitch angle γ of the helical recess sections 30 is smaller than 90°, for example within a range from 5° to 90°. In the shown embodiment, the pitch angle γ of the helical recess sections 30 is about 75°. The pitch angle γ of the helical recess sections 30 may be equal to a pitch angle δ of the helical protrusion sections 32.

As used herein and shown in Fig. 7, the pitch angle γ is measured between a circumferential direction about the central axis A and a helical extension direction of the helical recess sections 30, wherein the circumferential direction and the helical extension direction are unwound in a plane.

### Industrial Applicability

The piston 10 as exemplary disclosed herein is particularly applicable in gaseous fuel internal combustion engines as is described in more detail hereinbelow. It is contemplated, however, that the piston 10 may be used in other internal combustion engines, for example diesel or petrol internal combustion engines.

In operation of the gaseous fuel internal combustion engine equipped with the piston 10, the piston 10 travels to a top dead center position. Thereby, a squish flow is generated in a region above the piston top face 14 of the piston 10. The squish flow(s) is/are directed towards the central axis A. As the squish flows pass the wavy inner edge 20 of the piston top face 14, turbulences within the piston bowl 16 are generated, because the inner edge 20 functions as a stall edge.

Furthermore, during an intake stroke, a mixture of gaseous fuel and air is supplied via at least one (swirl generating) inlet channel into a combustion chamber in a swirling motion about the central axis A of the piston 10. As used herein, the combustion chamber is delimited by a cylinder head, a circumferential cylinder face, and a top end of the piston 10.

During the intake and the compression strokes, the swirling mixture of fuel and air from the inlet channels are guided into the piston bowl 16 via the plurality of recesses 26 in a specific manner. Particularly, the pinwheel shape of the inner edge 20 between the piston bowl 16 and the piston top face 14 causes the swirl flow to approach to a center of the piston bowl 16 as the swirl flow flows along the second recess section 26B, the third recess section 26C, and part of the first protrusion section 28A. Then, the swirl flow "collides" with the remaining part of the first protrusion section 28A (the part extending in a radial outward direction with respect to the central axis A) and the first recess section 26A. Here, a portion of the swirl flow enters the piston bowl 16 in a turbulent flow, and thereby helps to maintain the turbulences already present in the piston bowl 16 due to the squish flows at least to some extent, and may even increase the same.

The inflow of the swirl flow into the piston bowl 16 is particularly turbulent if the first protrusion section central angle ε of the first protrusion section 28A is equal to or smaller than 90°, and/or if the first recess section central angle ϕ of the first recess section 26A is equal to or smaller than 90°. The reason is that the smaller the central angels ε and ϕ are, the more difficult it is for the swirl flow to flow around the first recess section 26A without being forced to inflow into the piston bowl 16 in a turbulent flow.

Furthermore, in embodiments with helical recess sections 30, the turbulent inflow of the swirl flow into the piston bowl 16 may maintain, adapt or invert the swirling motion to a certain extent. The swirl flow may maintain its swirl direction if the inflow direction from the inlet channels corresponds to the helical direction of the helical recess sections 30, for example if the inflow direction and the helical direction of the helical recess sections 30 are both left-handed. On the other hand, the swirl flow may invert its swirl direction if passing the helical recess sections 30 in a case in which the inflow direction originating from the inlet channels is directed opposite to the helical direction of the helical recess sections 30, for example if the inflow direction is left-handed and the helical direction is right-handed. As a result, the turbulent and swirling inflow into the piston bowl 16 maintain and may even intensify the turbulences already present in the piston bowl 16 due to the influence of the squish flows.

Accordingly, a highly turbulent region in the center of the combustion chamber (within the piston bowl 16) for the combustion of the mixture of fuel and air is generated, which improves combustion as one skilled in the art will appreciate.

Furthermore, for preventing the generation of peak temperature spots and smoothening the flows along the faces of the piston 10, the various portions of the piston 10 smoothly transition into respective adjacent portions via predefined fillets as can be seen in Figs. 1 to 6.

Terms such as "about", "around", "approximately", or "substantially" as used herein when referring to a measurable value such as a parameter, an amount, a temporal duration, and the like, is meant to encompass variations of +/-10% or less, preferably +1-5% or less, more preferably +1/-1% or less, and still more preferably +1/-0.1 % or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

Although the preferred embodiments of this invention have been described herein, improvements and modifications may be incorporated without departing from the scope of the following claims.

## Claims

1. A piston (10) for a gaseous fuel internal combustion engine, comprising:
a piston skirt (12) extending circumferentially about a central axis (A);
a piston top face (14) extending in a plane perpendicular to the central axis (A) and including an inner edge (20) circumferentially extending about the central axis (A); and
a pot-shaped piston bowl (16) including a bowl side face (24) extending circumferentially about the central axis (A), the piston bowl (16) and the piston top face (14) being connected via the inner edge (20) of the piston top face (14), wherein the bowl side face (24) includes a plurality of recesses (26) and protrusions (28) arranged alternately to each other in a circumferential direction about the central axis (A), the protrusions (28) extending in a direction to the central axis (A), and the recesses (26) and the protrusions (28) are configured so that the inner edge (20) has a pinwheel shape,
**characterized in that**
the recesses (26) consist of a helical recess (30) that helically extends about the central axis (A); and/or
the protrusions (28) consist of a helical protrusion (32) that helically extends about the central axis (A).

2. The piston (10) of claim 1, wherein the bowl side face (24) tapers in a direction of the central axis (A) from the piston top face (14) to the bowl bottom face (22).

3. The piston (10) of claim 1 or claim 2, wherein:
the protrusions (28) include a first protrusion section (28A) being convex and extending between two outer first protrusion section ends in a plane perpendicular to the central axis (A), and a first protrusion section central angle (ε) of the first protrusion section (28A) subtended between the two outer first protrusion section ends is equal to or smaller than 90°; and/or
the recesses (26) include a first recess section (26A) being concave and extending between two outer first recess section ends in a plane perpendicular to the central axis (A), and a first recess section central angle (ϕ) of the first recess section (26A) subtended between the two outer first recess section ends is equal to or smaller than 90°.

4. The piston (10) of any one of the preceding claims, wherein the bowl bottom face (22) is substantially disc-shaped.

5. The piston (10) of any one of the preceding claims, wherein the recesses (26) include a second recess section (26B) being straight in a plane perpendicular to the central axis (A), and a second recess section angle (λ) other than 90° is confined between the second recess section (26B) and a radial line drawn between the central axis (A) and a center of the second recess section (26B).

6. The piston (10) of claim 5, wherein the second recess section angle (λ) is within a range between 80° and 90°, particularly 86°.

7. The piston (10) of any one of the preceding claims, wherein the piston bowl (16) has a first bowl diameter (D1) limited by radial innermost points of the protrusions (28) and a second bowl diameter (D2) limited by radial outermost points of the recesses (26), and a ratio between the first bowl diameter (D1) and the second bowl diameter (D2) is within a range between 0,7 and 0,9, particularly about 0,8.

8. The piston (10) of any one of the preceding claims, wherein the piston bowl (16) has a first bowl diameter (D1) limited by radial innermost points of the protrusions (28) and the piston (10) has a piston outer diameter (D3), and a ratio between the first bowl diameter (D1) and the piston outer diameter (D3) is within a range between 0,45 and 0,65, for example about 0,55.

9. The piston (10) of any one of the preceding claims, wherein:
the recesses (26) are provided along an entire height (H2) of the bowl side face (24); and/or
the protrusions (28) are provided along an entire height (H2) of the bowl side face (24).

10. The piston (10) of claim 1, wherein:
the helical recess sections (30) are formed as right-handed helical sections, as left-handed helical sections, or as combinations thereof; and/or
the helical protrusion sections (32) are formed as right-handed helical sections, as left-handed helical sections, or as combinations thereof.

11. The piston (10) of claim 1 or claim 10, wherein the helical recess sections (30) have a pitch angle (γ) smaller than 90°, particularly within a range between 5° and 85°.

12. A method for operating an internal combustion engine, particularly a gaseous fuel internal combustion engine, with a piston (10) according to any one of claims 1 to 11, comprising:
supplying a mixture of fuel and air via at least one inlet channel into a combustion chamber in a swirling motion about a central axis (A) of the combustion chamber; and
guiding the swirling mixture of fuel and air into the pot-shaped piston bowl (16) of the piston (10) via the inner circumferential edge (20) connecting the piston bowl (16) and the piston top face (14) of the piston (10), the inner circumferential edge (20) having the pinwheel shape.

13. The method of claim 12, further comprising:
moving the piston (10) to a top dead center position and, thereby, generating a squish flow in a region above the piston top face (14) of the piston (10), the squish flow being directed towards the central axis (A);
generating turbulences within the piston bowl (16) at the inner circumferential edge (20) of the piston top face (14) as the squish flow passes the inner circumferential edge (20) functioning as a stall edge; and
maintaining the turbulences within the piston bowl (16) by guiding the swirling mixture of fuel and air into the piston bowl (16) via the inner circumferential edge (20) having the pinwheel shape.

## Patentansprüche

1. Kolben (10) für einen Verbrennungsmotor mit gasförmigem Brennstoff, umfassend:
einen Kolbenschaft (12), der sich umfänglich um eine zentrale Achse (A) erstreckt;
eine obere Kolbenfläche (14), die sich in einer Ebene erstreckt, die senkrecht zur zentralen Achse (A) ist, und eine innere Kante (20) einschließt, die sich umfänglich um die zentrale Achse (A) erstreckt; und
eine topfförmige Kolbenmulde (16), die eine seitliche Muldenfläche (24) einschließt, die sich umfänglich um die zentrale Achse (A) erstreckt, wobei die Kolbenmulde (16) und die obere Kolbenfläche (14) über die innere Kante (20) der oberen Kolbenfläche (14) verbunden sind, wobei die seitliche Muldenfläche (24) eine Vielzahl von Aussparungen (26) und Vorsprüngen (28) einschließt, die alternierend zueinander in einer Umfangsrichtung um die zentrale Achse (A) angeordnet sind, wobei sich die Vorsprünge (28) in einer Richtung zur zentralen Achse (A) erstrecken, und die Aussparungen (26) und die Vorsprünge (28) so konfiguriert sind, dass die innere Kante (20) eine Windradform aufweist,
**dadurch gekennzeichnet, dass**
die Aussparungen (26) aus einer helikalen Aussparung (30) bestehen, die sich helikal um die zentrale Achse (A) erstreckt; und/oder
die Vorsprünge (28) aus einem helikalen Vorsprung (32) bestehen, der sich helikal um die zentrale Achse (A) erstreckt.

2. Kolben (10) nach Anspruch 1, wobei die seitliche Muldenfläche (24) in einer Richtung der zentralen Achse (A) von der oberen Kolbenfläche (14) zur unteren Muldenfläche (22) schmaler wird.

3. Kolben (10) nach Anspruch 1 oder Anspruch 2, wobei:
die Vorsprünge (28) einen ersten Vorsprungsabschnitt (28A) einschließen, der konvex ist und sich zwischen zwei äußeren ersten Vorsprungsabschnittsenden in einer Ebene erstrecken, die senkrecht zur zentralen Achse (A) ist, und ein erster zentraler Vorsprungsabschnittswinkel (ε) des ersten Vorsprungsabschnitts (28A), der zwischen den zwei äußeren ersten Vorsprungsabschnittsenden eingegrenzt ist, gleich oder kleiner als 90° ist; und/oder
die Aussparungen (26) einen ersten Aussparungsabschnitt (26A) einschließen, der konkav ist und sich zwischen zwei äußeren ersten Aussparungsabschnittsenden in einer Ebene erstrecken, die senkrecht zur zentralen Achse (A) ist, und ein erster zentraler Aussparungsabschnittswinkel (ϕ) des ersten Aussparungsabschnitts (26A), der zwischen den zwei äußeren ersten Aussparungsabschnittsenden eingegrenzt ist, gleich oder kleiner als 90° ist.

4. Kolben (10) nach einem der vorstehenden Ansprüche, wobei die untere Muldenfläche (22) im Wesentlichen scheibenförmig ist.

5. Kolben (10) nach einem der vorstehenden Ansprüche, wobei die Aussparungen (26) einen zweiten Aussparungsabschnitt (26B) einschließen, der gerade in einer Ebene ist, die senkrecht zur zentralen Achse (A) ist, und ein zweiter Aussparungsabschnittswinkel (λ), der von 90° verschieden ist, zwischen dem zweiten Aussparungsabschnitt (26B) und einer radialen Linie eingeschlossen ist, die zwischen der zentralen Achse (A) und einem Zentrum des zweiten Aussparungsabschnitts (26B) gezogen ist.

6. Kolben (10) nach Anspruch 5, wobei der zweite Aussparungsabschnittswinkel (λ) innerhalb eines Bereichs zwischen 80° und 90° ist, insbesondere 86°.

7. Kolben (10) nach einem der vorstehenden Ansprüche, wobei die Kolbenmulde (16) einen ersten Muldendurchmesser (D1), der durch radiale innerste Punkte der Vorsprünge (28) begrenzt wird, und einen zweiten Muldendurchmesser (D2) aufweist, der durch radiale äußerste Punkte der Aussparungen (26) begrenzt wird, und ein Verhältnis zwischen dem ersten Muldendurchmesser (D1) und dem zweiten Muldendurchmesser (D2) innerhalb eines Bereichs zwischen 0,7 und 0,9 ist, insbesondere etwa 0,8.

8. Kolben (10) nach einem der vorstehenden Ansprüche, wobei die Kolbenmulde (16) einen ersten Muldendurchmesser (D1) aufweist, der durch radiale innerste Punkte der Vorsprünge (28) begrenzt wird, und der Kolben (10) einen äußeren Kolbendurchmesser (D3) aufweist, und ein Verhältnis zwischen dem ersten Muldendurchmesser (D1) und dem äußeren Kolbendurchmesser (D3) innerhalb eines Bereichs zwischen 0,45 und 0,65 ist, zum Beispiel etwa 0,55.

9. Kolben (10) nach einem der vorstehenden Ansprüche, wobei:
die Aussparungen (26) entlang einer gesamten Höhe (H2) der seitlichen Muldenfläche (24) bereitgestellt sind; und/oder
die Vorsprünge (28) entlang einer gesamten Höhe (H2) der seitlichen Muldenfläche (24) bereitgestellt sind.

10. Kolben (10) nach Anspruch 1, wobei:
die helikalen Aussparungsabschnitte (30) als rechtshändige helikale Abschnitte, als linkshändige helikale Abschnitte, oder als Kombinationen davon gebildet sind; und/oder
die helikalen Vorsprungsabschnitte (32) als rechtshändige helikale Abschnitte, als linkshändige helikale Abschnitte, oder als Kombinationen davon gebildet sind.

11. Kolben (10) nach Anspruch 1 oder Anspruch 10, wobei die helikalen Aussparungsabschnitte (30) einen Steigungswinkel (γ) von kleiner als 90° aufweisen, insbesondere innerhalb eines Bereichs zwischen 5° und 85°.

12. Verfahren zum Betreiben eines Verbrennungsmotors, insbesondere eines Verbrennungsmotors mit gasförmigem Brennstoff, mit einem Kolben (10) nach einem der Ansprüche 1 bis 11, umfassend:
Zuführen eines Gemisches von Brennstoff und Luft über mindestens einen Einlasskanal in eine Verbrennungskammer in einer Wirbelbewegung um eine zentrale Achse (A) der Verbrennungskammer; und
Führen des Wirbelgemisches von Brennstoff und Luft in die topfförmige Kolbenmulde (16) des Kolbens (10) über die innere Umfangskante (20), welche die Kolbenmulde (16) und die obere Kolbenfläche (14) des Kolbens (10) verbindet, wobei die innere Umfangskante (20) die Windradform aufweist.

13. Verfahren nach Anspruch 12, weiter umfassend:
Bewegen des Kolbens (10) zu einer oberen Totpunktposition und dadurch Erzeugen einer Quetschströmung in einer Region oberhalb der oberen Kolbenfläche (14) des Kolbens (10), wobei die Quetschströmung hin zur zentralen Achse (A) gerichtet wird;
Erzeugen von Turbulenzen innerhalb der Kolbenmulde (16) an der inneren Umfangskante (20) der oberen Kolbenfläche (14), während die Quetschströmung an der inneren Umfangskante (20) vorbeifließt, die als eine Abrisskante fungiert; und
Aufrechterhalten der Turbulenzen innerhalb der Kolbenmulde (16) durch Führen des Wirbelgemisches von Brennstoff und Luft in die Kolbenmulde (16) über die innere Umfangskante (20), welche die Windradform aufweist.

## Revendications

1. Piston (10) pour un moteur à combustion interne à combustible gazeux, comprenant :
une jupe de piston (12) s'étendant sur la circonférence autour d'un axe central (A) ;
une face supérieure de piston (14) s'étendant dans un plan perpendiculaire à l'axe central (A) et incluant une arête intérieure (20) s'étendant sur la circonférence autour de l'axe central (A) ; et
un bol de piston en forme de pot (16) incluant une face latérale de bol (24) s'étendant sur la circonférence autour de l'axe central (A), le bol de piston (16) et la face supérieure de piston (14) étant raccordés via l'arête intérieure (20) de la face supérieure de piston (14), dans lequel la face latérale de bol (24) inclut une pluralité d'évidements (26) et de saillies (28) agencés en alternance les uns les autres dans une direction circonférentielle autour de l'axe central (A), les saillies (28) s'étendant dans une direction vers l'axe central (A), et les évidements (26) et les saillies (28) sont configurés de sorte que l'arête intérieure (20) présente une forme de moulinet,
**caractérisé en ce que**
les évidements (26) se composent d'un évidement hélicoïdal (30) qui s'étend en hélice autour de l'axe central (A) ; et/ou
les saillies (28) se composent d'une saillie hélicoïdale (32) qui s'étend en hélice autour de l'axe central (A).

2. Piston (10) selon la revendication 1, dans lequel la face latérale de bol (24) se rétrécit dans une direction de l'axe central (A) depuis la face supérieure de piston (14) à la face inférieure de bol (22).

3. Piston (10) selon la revendication 1 ou 2, dans lequel :
les saillies (28) incluent une première section de saillie (28A) convexe et s'étendant entre deux premières extrémités de section de saillie extérieures dans un plan perpendiculaire à l'axe central (A), et un premier angle central de section de saillie (ε) de la première section de saillie (28A) sous-tendu entre les deux premières extrémités de section de saillie extérieures est égal ou inférieur à 90° ; et/ou
les évidements (26) incluent une première section d'évidement (26A) concave et s'étendant entre deux premières extrémités de section d'évidement extérieures dans un plan perpendiculaire à l'axe central (A), et un premier angle central de section d'évidement (ϕ) de la première section d'évidement (26A) sous-tendu entre les deux premières extrémités de section d'évidement est égal ou inférieur à 90°.

4. Piston (10) selon l'une quelconque des revendications précédentes, dans lequel la face inférieure de bol (22) est sensiblement en forme de disque.

5. Piston (10) selon l'une quelconque des revendications précédentes, dans lequel les évidements (26) incluent une seconde section d'évidement (26B) droite dans un plan perpendiculaire à l'axe central (A), et un second angle de section d'évidement (λ) autre que 90° est limité entre la seconde section d'évidement (26B) et une ligne radiale tracée entre l'axe central (A) et un centre de la seconde section d'évidement (26B).

6. Piston (10) selon la revendication 5, dans lequel le second angle de section d'évidement (λ) est dans une plage entre 80° et 90°, particulièrement de 86°.

7. Piston (10) selon l'une quelconque des revendications précédentes, dans lequel le bol de piston (16) présente un première diamètre de bol (D1) limité par des points les plus intérieurs radialement des saillies (28) et un second diamètre de bol (D2) limité par des points les plus extérieurs radialement des évidements (26), et un rapport entre le premier diamètre de bol (D1) et le second diamètre de bol (D2) est dans une plage entre 0,7 et 0,9, particulièrement d'environ 0,8.

8. Piston (10) selon l'une quelconque des revendications précédentes, dans lequel le bol de piston (16) présente un premier diamètre de bol (D1) limité par des points les plus intérieurs radialement des saillies (28) et le piston (10) présente un diamètre extérieur de piston (D3), et un rapport entre le premier diamètre de bol (D1) et le diamètre extérieur de piston (D3) est dans une plage entre 0,45 et 0,65, par exemple d'environ 0,55.

9. Piston (10) selon l'une quelconque des revendications précédentes, dans lequel :
les évidements (26) sont prévus le long d'une hauteur entière (H2) de la face latérale de bol (24) ; et/ou
les saillies (28) sont prévues le long d'une hauteur entière (H2) de la face latérale de bol (24).

10. Piston (10) selon la revendication 1, dans lequel :
les sections d'évidement hélicoïdales (30) sont formées en tant que sections hélicoïdales à droite, en tant que sections hélicoïdales à gauche ou en tant que combinaisons de celles-ci ; et/ou
les sections de saillie hélicoïdales (32) sont formées en tant que sections hélicoïdales à droite, en tant que sections hélicoïdales à gauche ou en tant que combinaisons de celles-ci.

11. Piston (10) selon la revendication 1 ou 10, dans lequel :
les sections d'évidement hélicoïdales (30) présentent un angle de pas (γ) inférieur à 90°, particulièrement dans une plage entre 5° et 85°.

12. Procédé de fonctionnement d'un moteur à combustion interne, particulièrement d'un moteur à combustion interne à combustible gazeux, avec un piston (10) selon l'une quelconque des revendications 1 à 11, comprenant :
la fourniture d'un mélange de combustible et d'air via au moins un canal d'entrée dans une chambre de combustion dans un mouvement de tourbillonnement autour d'un axe central (A) de la chambre de combustion ; et
le guidage du mélange tourbillonnant de carburant et d'air dans le bol de piston en forme de pot (16) du piston (10) via l'arête circonférentielle intérieure (20) raccordant le bol de piston (16) et la face supérieure de piston (14) du piston (10), l'arête circonférentielle intérieure (20) présentant la forme d'un moulinet.

13. Procédé selon la revendication 12, comprenant en outre :
le déplacement du piston (10) dans une position de point mort haut et, ainsi, la génération d'un flux de gicleur dans une région au-dessus de la face supérieure de piston (14) du piston (10), le flux de gicleur étant dirigé vers l'axe central (A) ;
la génération de turbulences dans le bol de piston (16) sur l'arête circonférentielle intérieure (20) de la face supérieure de piston (14) lorsque le flux de gicleur passe l'arête circonférentielle intérieure (20) fonctionnant en tant qu'arête de blocage ; et
le maintien des turbulences dans le bol de piston (16) par guidage du mélange tourbillonnant de carburant et d'air dans le bol de piston (16) via l'arête circonférentielle intérieure (20) présentant la forme d'un moulinet.
